# EUROPÄISCHE PATENTSCHRIFT

(11) **EP 3 661 718 B1**
(45) Veröffentlichungstag und Bekanntmachung des Hinweises auf die Patenterteilung: **13.09.2023**
(21) Anmeldenummer: 18773420.7
(22) Anmeldetag: 19.09.2018
(51) Int. Cl.: B29C 44/58, B29C 44/34, B29C 33/56, B29C 44/60, B29C 44/44, B29C 35/04

(54) **WERKZEUG**
TOOL
MOULE

(30) Priorität: 12.10.2017 DE 102017123796
(43) Veröffentlichungstag der Anmeldung: 10.06.2020
(73) Patentinhaber: Siegfried Hofmann GmbH, 96215 Lichtenfels (DE)
(72) Erfinder: SCHÜTZ, Johannes, 96052 Bamberg (DE); BECK, Jonas, 96050 Bamberg (DE); SCHMIEDECK, Marcus, 09557 Flöha OT Falkenau (DE)
(74) Vertreter: Hafner & Kohl PartmbB
(86) Internationale Anmeldenummer: PCT/EP2018/075307
(87) Internationale Veröffentlichungsnummer: WO 2019/072505

(56) Entgegenhaltungen:
- DE-A1-102012 202 233
- DE-A1-102015 112 149
- JP-A- S5 573 535
- US-A- 4 192 638

## Beschreibung

Die Erfindung betrifft ein Werkzeug, insbesondere ein Schäumwerkzeug zur Verarbeitung schäumbarer Kunststoffpartikel, mit wenigstens einem wenigstens einen Abschnitt einer Kavität ausbildenden Bereich.

Derartige Werkzeuge, insbesondere Schäumwerkzeuge, sind aus dem Stand der Technik hinlänglich bekannt. Diese werden zur Herstellung bzw. zur Formgebung von Formteilen aus schäumbaren Kunststoffpartikeln, beispielsweise in oder als Formteilautomaten verwendet. Derartige Formteilautomaten weisen wenigstens ein Schäumwerkzeug auf, sodass diese beispielsweise zwei Platten umfassen, die hubartig aufeinander zu- bzw. voneinander wegbewegbar sind. Zwischen derartigen Schäumwerkzeugen bildet sich somit eine Kavität aus, die einen Formhohlraum vorgibt, in dem die schäumbaren Kunststoffpartikel geformt werden können. Als Schäumwerkzeug wird im Rahmen dieser Anmeldung auch ein Bestandteil eines Werkzeugs verstanden, der einen Abschnitt einer Kavität ausbildet. Somit wird beispielsweise jede Werkzeughälfte eines zuvor beschriebenen Formteilautomaten als Werkzeug im Sinne der Anmeldung verstanden.

Zur Herstellung werden die schäumbaren und/oder vorgeschäumte Kunststoffpartikel in die Kavität eingebracht und beispielsweise mittels heißen Dampfs durch einen so genannten Sintervorgang unter Ausbildung eines geschäumten Formteils miteinander verbunden, kurz miteinander versintert. Die einzelnen Kunststoffpartikel können somit in der Kavität beispielsweise durch zumindest teilweises Aufschmelzen miteinander verbunden werden. Es können somit auch Kunststoffpartikel Anwendung finden, die kein aktives Treibmittel aufweisen. Dabei legt die Oberfläche bzw. die Oberflächenstruktur der Kavität die Oberflächenstruktur des entsprechend ausgebildeten Formteils fest. Hierbei ist es möglich, die Oberfläche der Kavität entsprechend den Anforderungen an die Oberfläche des damit hergestellten Formteils zu wählen, sodass das Formteil nach dem Entformen die entsprechende durch das Schäumwerkzeug geformte Oberfläche aufweist.

Bei der Herstellung derartiger Schäumwerkzeuge bzw. deren Oberflächenstrukturen ist es bekannt, mittels subtraktiver Verfahren, wie beispielsweise Fräsen, Erodieren, Ätzen oder Laserabtragung entsprechende Oberflächenstrukturen in die Oberflächen der Schäumwerkzeuge einzubringen. Ferner sind umformende Verfahren, wie beispielsweise Prägen bekannt. Um eine definierte Stabilität der formgebenden Oberfläche des Werkzeugs zu gewährleisten, wird das Werkzeug mit einer entsprechenden Materialstärke ausgeführt. In der formgebenden Oberfläche des Werkzeugs sind entsprechend Öffnungen, beispielsweise Düsen, integriert, sodass der Dampf in die Kavität geleitet werden kann.

Um eine ausreichende Stabilität des Werkzeugs zu gewährleisten, werden üblicherweise Werkzeug mit entsprechend hoher Wandstärke verwendet, insbesondere im Bereich der formgebenden Oberfläche, wodurch die durchführbaren Fertigungsprozesse aufgrund der thermischen Trägheit der entsprechenden, die formgebende Oberfläche aufweisenden Wandung beschränkt. Mit anderen Worten begrenzt die Wandstärke und somit die Masse des Werkzeugs die minimalen Zykluszeiten, die für ein Abkühlen bzw. ein Aufheizen des Werkzeugs (und somit des Bauteils) benötigt werden. Die Wandstärke des Werkzeugs ist dabei nicht beliebig wählbar, da bei zu geringer Wandstärke, insbesondere im Bereich der formgebenden Oberfläche des Werkzeugs, die Stabilität des Werkzeugs nicht mehr ausreichend gegeben sein kann. Eine unzureichende Stabilität des Werkzeugs kann sich negativ auf die Herstellung bzw. die Verarbeitung der schäumbaren Kunststoffpartikel auswirken.

Dokument DE 10 2012 202 233 A1 offenbart ein Werkzeug gemäß dem Oberbegriff des Anspruchs 1 und ein Verfahren gemäß dem Oberbegriff des Anspruchs 13. Es zeigt eine Vorrichtung zur Herstellung von Formteilen bekannt, das zwei trennbare Werkzeugteile aufweist, die in einem geschlossenen Zustand ein Formnest bilden, wobei die das Formnest begrenzende Werkzeugwandung mehrschichtig ausgebildet ist.

Der Erfindung liegt daher die Aufgabe zugrunde, ein Werkzeug der eingangs genannten Art anzugeben, das einen verbesserten Verarbeitungsprozess ermöglicht, insbesondere ein Werkzeug anzugeben, das eine geringere thermische Trägheit aufweist.

Die Aufgabe wird durch ein Werkzeug mit den Merkmalen des Anspruchs 1 gelöst. Vorteilhafte Weiterbildungen der Erfindung sind Gegenstand der Unteransprüche.

Die Erfindung beruht auf der Erkenntnis, dass das Werkzeug bzw. wenigstens ein Teil des Werkzeugs, welches zur Verarbeitung von schäumbaren bzw. vorgeschäumten Kunststoffpartikeln vorgesehen ist, d. h. bei welchem es sich typischerweise um ein Schäumwerkzeug handelt, eine Grundschicht und eine über eine Zwischenschicht mit der Grundschicht verbundene, die Kavität zumindest abschnittsweise begrenzende, zumindest abschnittsweise formgebende Deckschicht aufweist, wobei die Zwischenschicht von wenigstens einem Fluid zwischen wenigstens einem Strömungseinlass und wenigstens einer in der Deckschicht angeordneten Öffnung durchströmbar ist. Im Rahmen dieser Anmeldung wird Bezug auf ein Werkzeug genommen, wobei selbstverständlich alle Ausführungen auch auf einen entsprechenden Teil des Werkzeugs, insbesondere eine Werkzeughälfte, übertragbar sind. Bei dem Fluid handelt es sich typischerweise um Dampf, insbesondere heißen Wasserdampf.

Nach der Erfindung ist sonach vorgesehen, dass das Werkzeug einen mehrschichtigen Aufbau aufweist, bei dem eine Grundschicht über eine Zwischenschicht mit einer Deckschicht verbunden ist. Somit wird gewährleistet, dass die Deckschicht als solche eine geringere Wandstärke aufweisen kann, als im Stand der Technik üblich, insbesondere kann diese filigran ausgeführt sein. Dadurch reduziert sich die Masse der Deckschicht, sodass die thermische Trägheit der Deckschicht gegenüber üblichen Werkzeugen reduziert ist. Da die Deckschicht zumindest abschnittsweise formgebend wirkt und somit mit dem herzustellenden Bauteil bei dessen Herstellungsprozess in Kontakt steht, ist durch die Reduzierung der Masse der Deckschicht und somit der Reduzierung deren thermischer Trägheit, eine verbesserte Prozessführung möglich. Die Temperierung der Kavität wird somit maßgeblich durch die thermische Trägheit der Deckschicht beeinflusst, wobei eine geringe thermische Trägheit der Deckschicht eine verbesserte, insbesondere schnellere Temperierung der Kavität und des darin herzustellenden Bauteils ermöglicht. Insbesondere sind kürzere minimale Zykluszeiten für das Aufheizen bzw. das Abkühlen der Deckschicht möglich. Da die Kavität über die Deckschicht mit dem Fluid befüllbar ist und somit sowohl mit dem Fluid als auch mit dem Bauteil in thermischem Kontakt steht, wirkt sich die reduzierte thermische Trägheit unmittelbar auch auf das Abkühlverhalten bzw. das Aufheizverhalten des herzustellenden Bauteils aus.

Die Deckschicht weist außerdem zumindest abschnittsweise formgebende Eigenschaften auf, insbesondere ist die Deckschicht an die Kontur des Bauteils angepasst. Die Deckschicht begrenzt zumindest abschnittsweise das Volumen der Kavität, in dem das Bauteil hergestellt werden soll, insbesondere in dem das Bauteil, beispielsweise mittels heißen Wasserdampfs, geschäumt wird.

Die Zwischenschicht ist erfindungsgemäß dafür vorgesehen, die Deckschicht abzustützen, indem die Zwischenschicht die Deckschicht mit der Grundschicht mechanisch verbindet. Die Grundschicht kann dabei gegenüber der Deckschicht deutlich massiver, insbesondere mit höherer Wandstärke ausgeführt sein, sodass diese entsprechende strukturelle Eigenschaften aufweist, um dem Werkzeug definierte Stabilität bzw. Festigkeit zu verschaffen. Auf die Deckschicht wirkende Kräfte können sonach über die Zwischenschicht in die Grundschicht eingeleitet werden, sodass die Deckschicht mittels der Zwischenschicht an der Grundschicht abgestützt ist. Somit ist es möglich, die vergleichsweise filigran ausgeführte Deckschicht, insbesondere mit reduzierter Wandstärke ausgeführte Deckschicht, an der Grundschicht abzustützen. Die Zwischenschicht weist sonach wenigstens eine Verbindung auf, über die die Deckschicht mit der Grundschicht mechanisch verbunden ist. Über die wenigstens eine Verbindung kann eine auf die Deckschicht wirkende Kraft in die Grundschicht eingeleitet und dort aufgenommen werden. Somit muss die Deckschicht selbst keine tragenden bzw. strukturellen Eigenschaften aufweisen, sondern kann filigran ausgeführt und auf die Formgebung des Bauteils reduziert sein.

Die Zwischenschicht weist ferner die Eigenschaft auf, von wenigstens einem Fluid durchströmbar zu sein. Mit anderen Worten kann die Zwischenschicht ein Fluid führen, das über einen Strömungseinlass in die Zwischenschicht eingeleitet wird. Das Fluid kann sonach über den Strömungseinlass in die Zwischenschicht einströmen und durch wenigstens eine Öffnung, beispielsweise eine Düse, in der Deckschicht aus der Zwischenschicht ausströmen und in die Kavität einströmen. Selbstverständlich kann das Werkzeug mehrere Strömungseinlässe und mehrere Öffnungen aufweisen. Zusätzlich kann wenigstens ein Strömungsauslass in dem Werkzeug vorgesehen sein, durch den das Fluid die Zwischenschicht auf anderem Weg als in die Kavität verlassen kann.

Die erfindungsgemäße Zwischenschicht ermöglicht dabei vorteilhafterweise, dass der durch das in die Zwischenschicht einströmende Fluid in der Zwischenschicht erzeugte Innendruck aufgenommen bzw. abgestützt werden kann. Insbesondere wird dadurch gewährleistet, dass die Deckschicht sich durch von dem Fluid auf die Deckschicht übertragene Kräfte nicht oder zumindest nicht wesentlich verformt, da entsprechende Kräfte von der Zwischenschicht aufgenommen werden können. Die Stabilität des Werkzeugs wird sonach durch die Zwischenschicht auch im Hinblick auf Auswirkungen des in die Zwischenschicht eingeströmten bzw. in dieser geführten Fluids verbessert.

Demnach weist die Deckschicht wenigstens eine Öffnung, insbesondere eine Vielzahl von Öffnungen, auf, durch die das Fluid in die Kavität einströmen kann. Die Zwischenschicht ist daher neben der Eigenschaft, auf die Deckschicht eingeleitete Kräfte auf die Grundschicht zu übertragen, ferner dazu ausgebildet, das Fluid, das zum Schäumen der Kunststoffpartikel in der Kavität verwendet wird, zu führen und insbesondere von einem Strömungseinlass zu der wenigstens einen in der Deckschicht angeordneten Öffnung zu leiten. Das Fluid kann sonach durch einen Strömungseinlass in die Zwischenschicht eingeführt werden, von wo aus es die Zwischenschicht durchströmt und aus der wenigstens einen Öffnung in der Deckschicht in die Kavität einströmen kann, um beispielsweise schäumbare Kunststoffpartikel zu schäumen. Als Kunststoff für die Herstellung des Bauteils kann beispielsweise expandiertes Polypropylen (EPP) verwendet werden.

Im Rahmen dieser Anmeldung wird unter dem Begriff "Öffnung" jeder Teil der Deckschicht verstanden, der nicht fluiddicht bezogen auf das in der Zwischenschicht geführte Fluid ist. Insbesondere kann die Deckschicht somit wenigstens einen, bevorzugt eine Vielzahl von, Mikrokanälen aufweisen, durch die das Fluid von der Zwischenschicht durch die Deckschicht in die Kavität einströmen kann. Es ist ebenso möglich, dass wenigstens ein Teil der Deckschicht porös ausgebildet ist und demnach eine Vielzahl von Poren aufweist, durch welche das Fluid von der Zwischenschicht in die Deckschicht strömen kann. Grundsätzlich ist eine beliebige Kombination von makroskopischen Öffnungen und/oder mikroskopischen Öffnungen bzw. Mikrokanälen und/oder porösen Abschnitten in der Deckschicht möglich.

Ersichtlich ist die Zwischenschicht somit nicht als "leeres" Volumen ausgeführt, das zwischen der Deckschicht und der Grundschicht angeordnet ist, sondern die Zwischenschicht stellt wenigstens eine mechanische Verbindung, insbesondere eine Vielzahl mechanischer Verbindungen, her, die die Grundschicht mit der Deckschicht verbinden. Dabei können die mechanischen Verbindungen zwischen Deckschicht und Grundschicht beliebig, bevorzugt gleichmäßig, über die Fläche der Deckschicht und Grundschicht verteilt angeordnet sein. Die Deckschicht ist sonach an einer Vielzahl von Stellen an der Grundschicht abgestützt.

Ferner weist die Zwischenschicht eine definierte Volumendichte auf, derart, dass ein Fluid durch die Zwischenschicht geführt werden kann. Die Zwischenschicht kann sonach als medienführend, insbesondere fluidführend in Bezug auf das für den Herstellungsprozess verwendete Fluid, beispielsweise heißer Wasserdampf, bezeichnet werden. Des Weiteren ist es möglich, einen Materialeinlass vorzusehen, durch den das schäumbare Kunststoffmaterial, aus dem das entsprechende Bauteil herzustellen ist, beispielsweise schäumbare Kunststoffpartikel, durch die Zwischenschicht (bevorzugt getrennt von dem von dem Fluid durchströmten Volumen der Zwischenschicht) in die Kavität eingebracht werden kann.

Das Werkzeug, insbesondere das Schäumwerkzeug für die Verarbeitung schäumbarer Kunststoffpartikel, ist bevorzugt auf der Basis von CAD-Daten (computer aided design) in einem additiven Herstellungsprozess, beispielsweise mittels selektiven Laserschmelzens oder selektiven Lasersinterns herstellbar. Im Rahmen dieser Anmeldung wird durchgängig Bezug auf ein "Werkzeug" genommen, wobei selbstverständlich ein Schäumwerkzeug für die Verarbeitung schäumbarer Kunststoffpartikel als ein solches "Werkzeug" verstanden werden kann. Insbesondere sind alle Vorteile, Einzelheiten und Merkmale, die in der Anmeldung in Bezug auf das Werkzeug beschrieben werden, vollständig auf ein Schäumwerkzeug übertragbar.

In der Zwischenschicht ist eine Vielzahl von Struktureinrichtungen angeordnet, wobei die Deckschicht über die Struktureinrichtungen mit der Grundschicht verbunden ist und die Struktureinrichtungen von dem wenigstens einen in der Zwischenschicht geführten Fluid umströmt sind. Die Struktureinrichtungen sind sonach dafür vorgesehen, eine auf die Deckschicht wirkende Kraft in die Grundschicht zu übertragen. Die Struktureinrichtungen stützen sonach die Deckschicht an der Grundschicht ab. Insbesondere sind mehrere, beispielsweise eine Vielzahl von Struktureinrichtungen, vorgesehen, die über die Grundfläche der Grundschicht bzw. der Deckschicht verteilt angeordnet sind und entsprechende Bereiche der Deckschicht abstützen.

Die die Vielzahl von Struktureinrichtungen sind dabei derart in der Zwischenschicht verteilt angeordnet, dass das Fluid die Zwischenschicht durchströmen kann. Das Fluid umströmt sonach die in der Zwischenschicht angeordneten Struktureinrichtungen, um von dem Strömungseinlass zu der wenigstens einen Öffnung in der Deckschicht zu gelangen. Dabei kann insbesondere eine gleichmäßige Abstützung der Deckschicht erreicht werden, beispielsweise durch eine äquidistante Anordnung bzw. Verteilung der Struktureinrichtungen auf der Grundfläche der Grundschicht bzw. der Deckschicht. Es ist selbstverständlich ebenso möglich, bestimmte Bereiche der Deckschicht verstärkt abzustützen, beispielsweise indem in diesem Bereich die Dichte der Anordnung von Struktureinrichtungen erhöht ist.

Aufgrund der Struktureinrichtungen ist es möglich, die Deckschicht erheblich filigraner, insbesondere mit erheblich reduzierter Wandstärke, gegenüber dem Stand der Technik auszuführen und somit die thermische Trägheit der Deckschicht zu reduzieren. Somit sind Zykluszeiten in der Herstellung geschäumter Kunststoffbauteile deutlich verkürzt, da die über die Deckschicht abgegebene Wärme bzw. die in der Deckschicht gespeicherte Wärme beim Aufheizen und Abkühlen des Bauteils geringer ist. Somit kann ein entsprechendes Herstellungsverfahren für ein Bauteil energieeffizienter durchgeführt werden. Ferner ist eine schnellere gezieltere Temperierung des Bauteils über die Deckschicht möglich, da das Aufheizen bzw. Abkühlen bzw. allgemein das Temperieren der Deckschicht weniger Zeit in Anspruch nimmt und das Werkzeug dadurch dynamischer wird.

Die wenigstens eine Struktureinrichtung kann dabei grundsätzlich beliebig zwischen der Deckschicht und der Grundschicht angeordnet sein. Eine mögliche Anordnung der wenigstens einen Struktureinrichtung kann vorsehen, dass die Struktureinrichtung als Wandsegment ausgebildet ist. Als Wandsegment wird im Rahmen dieser Anmeldung ein Profil einer Struktureinrichtung verstanden, das in (beabsichtigter) Strömungsrichtung länger ausgebildet ist als senkrecht zur Strömungsrichtung. Das Wandsegment bildet sonach ein Strömungsleitelement mit wenigstens einer Strömungsleitfläche, die dafür verwendet werden kann, das durch die Zwischenschicht strömende Fluid zu leiten. Ein Wandsegment kann dabei beispielsweise (senkrecht zur Strömungsrichtung) einige Millimeter breit, zum Beispiel 0,5 bis 3 mm breit und (in Strömungsrichtung) 0,5 bis 2 cm lang ausgebildet sein. Selbstverständlich ist die individuelle Geometrie der als Wandsegment ausgebildeten Struktureinrichtung frei wählbar und vom individuellen Einsatzzweck bzw. von der Position in der Zwischenschicht abhängig. Die vorgenannten Beispiele sind sonach nicht abschließend zu verstehen, sondern lediglich beispielhaft. Durch das wenigstens eine Wandsegment kann das Fluid gezielt in Bereiche der Zwischenschicht geleitet werden.

Ferner können beliebig viele Struktureinrichtungen in der Zwischenschicht vorgesehen sein, die als Wandsegment ausgebildet sind und verschiedene Orientierungen aufweisen. So können wenigstens zwei als Wandsegment ausgebildete Struktureinrichtungen vorgesehen sein, deren Orientierung in Bezug auf die (beabsichtigte) Strömungsrichtung des Fluids unterschiedlich gewählt ist, d.h., dass die Wandsegmente unterschiedlich orientiert sind. Die Wandsegmente können beispielsweise rippenförmig oder rippenartig ausgebildet sein und das durch die Zwischenschicht strömende Fluid führen bzw. gezielt den Strömungswiderstand des Fluids in einer definierten Richtung reduzieren. Die Wandsegment können ferner jedwede beliebige Querschnittsform aufweisen, beispielsweise ein definiertes aerodynamisches Querschnittsprofil.

Des Weiteren kann mindestens eine Struktureinrichtung als Säulenelement ausgebildet sein, wobei das Säulenelement im Wesentlichen senkrecht auf der Deckschicht steht und die Deckschicht mit der Grundschicht verbindet. Insbesondere bei einer Vielzahl von Struktureinrichtungen, die als Säulenelement ausgebildet sind, ist die Deckschicht aufgrund der senkrechten Abstützung mittels der Säulenelemente besonders stabil auf der Grundschicht abgestützt. Dadurch ergibt sich ein besonders vorteilhafter Kraftverlauf, da auf die Deckschicht wirkende Kräfte senkrecht von dem oder den Säulenelementen aufgenommen und in die Grundschicht eingeleitet werden können. Bei einer runden, insbesondere halbkugelförmigen, Deckschicht ergeben sich sonach strahlenförmig von der Deckschicht abragende Säulenelemente, die die Deckschicht mit der Grundschicht verbinden. Unter der Anordnung der Säulenelemente "im Wesentlichen senkrecht zu der Deckschicht" ist im Rahmen dieser Anmeldung eine Anordnung zu verstehen, in der die Säulenelemente nach Möglichkeit, insbesondere unter Berücksichtigung von Einschränkungen durch den Herstellungsprozess, bestmöglich senkrecht zu der Deckschicht ausgerichtet sind, also nach Möglichkeit einen rechten Winkel zwischen jedem Säulenelement und der Deckschicht ausbilden. Über den Verlauf der Deckschicht hinweg können sich sonach verschieden angeordnete Säulenelemente ergeben, die insbesondere jeweils unterschiedliche Winkel mit der Grundschicht einschließen.

Die zuvor beschriebene Ausführung der wenigstens einen Struktureinrichtung als Wandsegment kann mit der Ausbildung der wenigstens einen Struktureinrichtung als Säulenelement kombiniert werden, sodass als Wandsegment ausgebildete Struktureinrichtungen ebenfalls senkrecht auf der Deckschicht angeordnet sein können, um die Deckschicht mit der Grundschicht zu verbinden.

Die wenigstens eine Struktureinrichtung kann dabei wenigstens sechs, bevorzugt acht, Strukturelemente aufweisen, wobei die wenigstens eine Struktureinrichtung mit den wenigstens sechs, bevorzugt acht, Strukturelementen mit wenigstens einer weiteren Struktureinrichtung und/oder der Deckschicht und/oder der Grundschicht verbunden ist. Die Struktureinrichtung kann dabei aus den sechs bzw. acht Strukturelementen bestehen.

Bei einer Zwischenschicht, die eine Vielzahl von Struktureinrichtungen aufweist und die Deckschicht über die Struktureinrichtungen mit der Grundschicht verbunden ist, wird die Deckschicht von der obersten Lage, also der Lage die der Deckschicht am nächsten ist, an Struktureinrichtungen getragen bzw. ist direkt mit dieser verbunden. Jede der Struktureinrichtungen weist dabei Strukturelemente auf, die die Struktureinrichtung mit der Deckschicht verbinden. Ebenso weist die unterste Lage, also die Lage die der Grundschicht am nächsten ist, Struktureinrichtungen auf, die (unmittelbar) mit der Grundschicht verbunden sind. Die entsprechenden Struktureinrichtungen der beschriebenen Lagen weisen auf der der Deckschicht bzw. der Grundschicht abgewandten Seite ebenfalls Strukturelemente auf, die die Struktureinrichtungen mit weiteren Struktureinrichtungen verbinden.

Im einfachsten Fall würde die Zwischenschicht lediglich eine einzige Lage an Struktureinrichtungen aufweisen, deren Strukturelemente zu einer Seite die Struktureinrichtung mit der Grundschicht verbinden und zur anderen Seite die Struktureinrichtung mit der Deckschicht verbinden. Bevorzugt weist die Zwischenschicht jedoch eine Vielzahl an Lagen von Struktureinrichtungen auf, sodass lediglich die oberste und die unterste Lage unmittelbar mit der Deckschicht bzw. der Grundschicht verbunden ist und die dazwischenliegenden Lagen in beiden Richtungen mit weiteren Struktureinrichtungen verbunden sind.

Als Strukturelement kann beispielsweise eine Strebe verstanden werden, die sich von einem Zentrum der Struktureinrichtung weg erstreckt, sodass jede Struktureinrichtung eine definierte Anzahl an Strukturelementen aufweist, die die Struktureinrichtung mit der Grundschicht oder der Deckschicht oder anderen Struktureinrichtungen verbinden. Insbesondere kann jede Struktureinrichtung sonach mehrere Strukturelemente aufweisen die die Struktureinrichtung mit der Grundschicht oder der Deckschicht oder anderen Struktureinrichtungen verbindet, wobei wenigstens ein Strukturelement vorgesehen sein kann, das eine Verbindung mit der Grundschicht und einer weiteren Struktureinrichtung oder der Deckschicht und einer weiteren Struktureinrichtung oder mehreren weiteren Struktureinrichtungen herstellt. Die Verbindung zweier Struktureinrichtungen erfolgt dabei durch das Verbinden wenigstens zweier Strukturelemente, wobei jeweils wenigstens ein Strukturelement einer der beiden Struktureinrichtungen zugeordnet ist. Bei zwei miteinander verbundenen Struktureinrichtungen stehen sonach jeweils wenigstens ein Strukturelement der beiden Struktureinrichtungen miteinander in Kontakt.

Die Struktureinrichtung als solche ist bevorzugt skalierbar ausgebildet, sodass in Abhängigkeit der Geometrie des Werkzeugs, insbesondere der Geometrie der Zwischenschicht und/oder der Deckschicht eine Dimensionierung der Struktureinrichtung vorgenommen werden kann. Ebenso ist jedes der Strukturelemente skalierbar, insbesondere hinsichtlich der Länge der Strukturelemente bzw. deren Querschnittsform und Querschnittsfläche.

Gemäß einer weiteren bevorzugten Ausgestaltung des Werkzeugs kann vorgesehen sein, dass die wenigstens eine Struktureinrichtung wenigstens einen Knotenabschnitt aufweist, von dem sich wenigstens zwei Strukturelemente, insbesondere kranzförmig oder sternförmig, weg erstrecken. Die wenigstens eine Struktureinrichtung weist sonach einen, bevorzugterweise zentral angeordneten, Knotenabschnitt auf, von dem aus sich die Strukturelemente der Struktureinrichtung radial weg erstrecken. Mit anderen Worten laufen die Strukturelemente der Struktureinrichtung im Knotenabschnitt zusammen bzw. erstrecken sich von diesem weg in Richtung der Deckschicht und/oder der Grundschicht und/oder weiterer Struktureinrichtungen.

Durch den Knotenabschnitt ist die Anordnung der Strukturelemente insbesondere kranzförmig oder sternförmig, wobei die Strukturelemente besonders bevorzugt eine möglichst isotrope Verteilung bzw. Ausrichtung annehmen. Dadurch wird jede der Struktureinrichtungen möglichst isotrop.

Die wenigstens eine Struktureinrichtung kann (virtuell) in zwei Hälften eingeteilt werden, wobei jeweils wenigstens drei, bevorzugt vier, der bevorzugterweise vorgesehenen sechs bzw. acht Strukturelemente einer der beiden Hälften der Struktureinrichtung zugeordnet sind. Jede Hälfte der Struktureinrichtung bildet dabei einen Kranz von Strukturelementen aus. Die beiden Hälften treffen sich an dem Knotenabschnitt bzw. sind über den Knotenabschnitt miteinander verbunden. Sonach gehen alle Strukturelemente, die der Struktureinrichtung zugeordnet sind, von dem Knotenabschnitt aus. Selbstverständlich ist es ebenso möglich, anstelle der sechs bzw. acht Strukturelemente drei bzw. vier Strukturelemente vorzusehen, die durch den Knotenabschnitt hindurch gehen, sich somit in dem Knotenabschnitt schneiden. Die entsprechenden Strukturelemente können jedoch auch als einzelne Strukturelemente aufgefasst werden und somit sechs bzw. acht Strukturelemente ausbilden, die sich von dem Knotenabschnitt weg erstrecken, wie eingangs beschrieben.

Die (virtuelle) Aufteilung der Struktureinrichtung in zwei Hälften kann dabei durch eine Ebene erfolgen, die beispielsweise waagrecht oder vertikal verläuft und die Struktureinrichtung halbiert. Insbesondere kann die Aufteilung der Struktureinrichtung in zwei Hälften durch eine der drei Hauptebenen erreicht werden, wobei die Hauptebenen durch die Zwischenräume zwischen den Strukturelementen verlaufen.

Insbesondere bei einer derartigen Aufteilung der sechs bzw. acht Strukturelemente sind die Strukturelemente unter einem definierten Winkel, bevorzugt unter 45° gegenüber einer Mittelebene durch den Knotenabschnitt und/oder unter 45° gegenüber einer senkrecht auf der Mittelebene stehenden Längsebene durch den Knotenabschnitt, von dem Knotenabschnitt (radial) abstehend angeordnet. Um die isotropen Eigenschaften der Struktureinrichtung weiter zu verbessern, sind acht Strukturelemente vorgesehen, wobei ein oberer Kranz von Strukturelementen symmetrisch zu einem unteren Kranz von Strukturelementen ausgebildet ist. Die einzelnen Strukturelemente ragen danach unter einem Winkel von 45° gegenüber der Mittelebene von dem Knotenabschnitt ab. Ebenso wird ein definierter Winkel von 45° zwischen zwei der Strukturelemente um eine die Deckschicht mit der Grundschicht verbindende (virtuelle) Längsachse der Struktureinrichtung ausgebildet. Bevorzugt ist die dadurch erhaltene Struktureinrichtung somit in allen vier Richtungen in einer Ebene isotrop und weist die gleichen Eigenschaften gegenüber der darüber und darunter angeordneten Lage von Struktureinrichtungen auf.

Die Struktureinrichtungen können ferner derart in der Zwischenschicht angeordnet sein, dass zwischen jeweils zwei miteinander verbundenen Struktureinrichtungen ein Knotenabschnitt ausgebildet ist. Die von den jeweiligen Struktureinrichtungen bzw. deren Knotenabschnitten abragenden Strukturelemente treffen sich sonach in einem weiteren Knotenabschnitt. Insbesondere bei der Ausgestaltung der Struktureinrichtung mit acht Strukturelementen treffen sich in jedem Knotenabschnitt im Volumen der Zwischenschicht (Randbereiche sowie Struktureinrichtungen, die mit der Grundschicht und/oder der Deckschicht verbunden sind, ausgenommen) acht Strukturelemente von verschiedenen Struktureinrichtungen. Der entsprechende Knotenabschnitt, an dem sich die Strukturelemente der verschiedenen Struktureinrichtungen treffen kann somit ebenfalls als Knotenabschnitt einer Struktureinrichtung aufgefasst werden. Ersichtlich ist dadurch eine isotrope Anordnung der Struktureinrichtungen in dem Volumen der Zwischenschicht erreicht. Somit bildet sich in der Zwischenschicht ein Gitter aus Knotenabschnitten, die über die strebenförmigen Strukturelemente miteinander verbunden sind.

Letztlich kann jedes der Strukturelemente einen beliebigen Querschnitt, insbesondere eine beliebige Querschnittsform bzw. eine Querschnittsfläche in einem Schnitt senkrecht zur Ausdehnungsachse aufweisen. Bevorzugt weisen alle Strukturelemente einer Struktureinrichtung näherungsweise denselben Querschnitt, also dieselbe Querschnittsform und somit dieselbe Querschnittsfläche auf. Beispielsweise ist es möglich die Strukturelemente mit einer runden und/oder eckigen, insbesondere rechteckigen Querschnittsfläche bzw. Querschnittsform zu versehen.

Zusätzlich ist in der Herstellung der Strukturelemente bzw. der Zwischenschicht auch eine nachträgliche Anpassung der Querschnittsform der Strukturelemente möglich, beispielsweise kann eine Glättung der Konturen bzw. der Querschnittsform der Strukturelemente erfolgen. Eine derartige Glättung kann beispielsweise durch eine Schleifpaste erreicht werden, die durch die Zwischenschicht geführt, beispielsweise gedrückt, wird und beim Passieren der einzelnen Struktureinrichtungen die beispielweise eckig gefertigten Querschnittsformen der Strukturelemente abrundet.

Gemäß einer weiteren Ausgestaltung des Werkzeugs kann vorgesehen sein, dass zwischen wenigstens einem Strukturelement der ersten Hälfte wenigstens einer Struktureinrichtung und wenigstens einem Strukturelement der anderen Hälfte derselben Struktureinrichtung eine Fase ausgebildet ist. Demnach kann eine Fase zwischen zwei Strukturelementen derselben Struktureinrichtung vorgesehen sein, wobei eines der Strukturelemente zu der ersten Hälfte und das andere Strukturelement zu der zweiten Hälfte der Struktureinrichtung gehört. Eine derartige Fase kann somit am Knotenabschnitt, in dem sich die einzelnen Strukturelemente der Struktureinrichtung treffen, ausgebildet sein.

Die Größe der Fase ist dabei beliebig wählbar und insbesondere auf die zu erwartenden Kräfte, die mittels der Struktureinrichtung übertragen werden bzw. ein zu erreichendes Strömungsprofil des die Struktureinrichtungen umströmenden Fluids einstellbar. Durch die vorgesehenen Fasen können Kerbspannungen reduziert werden, was zusätzlich vorteilhaft für die Stabilität des Werkzeugs ist. Die entsprechenden Fasen können vertikal und/oder horizontal angeordnet sein (eine vertikale Anordnung bezeichnet dabei eine Anordnung, die im Wesentlichen in einer parallel zu einer die Grundschicht mit der Deckschicht verbindenden Achse, angeordnet ist. Eine horizontale Anordnung bezeichnet dabei eine Anordnung, die im Wesentlichen parallel zu der Deckschicht und/oder der Grundschicht verläuft. Ferner kann vorgesehen sein, dass die vier Strukturelemente jedes Kranzes einer Struktureinrichtung mit einer Fase miteinander verbunden sind.

Gemäß einer weiteren Ausgestaltung des Werkzeugs kann wenigstens ein Strukturelement, bevorzugt mehrere miteinander verbundene Strukturelemente, wenigstens einen Fluidkanal aufweisen, welcher Fluidkanal von mindestens einem Fluid durchströmbar ist. Gemäß dieser Ausgestaltung ist vorgesehen, dass mehrere miteinander verbundene Strukturelemente, also Strukturelemente, die über Knotenabschnitte miteinander verbunden sind und insbesondere in einer Linie angeordnet sind, einen Fluidkanal ausbilden. Daneben ist es selbstverständlich alternativ oder zusätzlich ebenso möglich, dass zwei Strukturelemente, die in einem Knotenabschnitt miteinander verbunden sind, eine winkelige Verbindung des Fluidkanals ausbilden, sodass der Fluidkanal sich in beliebiger Richtung durch die Zwischenschicht ausbreiten kann, wobei die Knotenabschnitte als Verbindungspunkte des durch einzelne Strukturelemente verlaufenden Fluidkanals erachtet werden können.

Die entsprechenden Strukturelemente sind sonach hohl ausgebildet, sodass das Fluid, bzw. das entsprechende Medium durch die Strukturelemente hindurchführbar ist. Bei dem Fluid, dass durch die Strukturelemente geführt wird, muss es sich ersichtlich nicht notwendigerweise um dasselbe Fluid handeln, das durch den Strömungseinlass über die Zwischenschicht durch die wenigstens eine Öffnung in der Deckschicht in die Kavität geführt wird. Durch das Führen eines weiteren Fluids durch die Strukturelemente sind verschiedene weitere Prozessierungsmöglichkeiten, beispielsweise eine verbesserte Temperierung des Werkzeugs, insbesondere des in der Zwischenschicht strömenden Fluids, möglich.

Dabei kann in einem ersten mit der Grundschicht verbundenen oder mit der Deckschicht verbundenen Strukturelement das entsprechende Fluid eingeführt werden, sodass sich der Fluidkanal somit von der Grundschicht und/oder der Deckschicht weg erstreckt und einem Pfad von Strukturelementen über Knotenabschnitte durch die Zwischenschicht folgt. Insbesondere können mehrere Fluidkanäle vorgesehen sein, die voneinander getrennt oder untereinander verbunden in der Zwischenschicht angeordnet sind.

In der Zwischenschicht, insbesondere im Bereich eines im Wesentlichen waagrechten Abschnitts der Deckschicht, können wenigstens zwei voneinander verschiedene, insbesondere unterschiedlich skalierte, Struktureinrichtungen angeordnet sein. Dadurch ist es möglich, zusätzliche Struktureinrichtungen vorzusehen, die beispielsweise zwischen den Strukturelementen einer ersten Sorte von Struktureinrichtungen angeordnet werden können. Sonach können beispielsweise verschieden große Struktureinrichtungen vorgesehen sein, wobei durch größere Struktureinrichtungen das Volumen der Zwischenschicht ausgefüllt wird, wohingegen im Bereich der filigranen Deckschicht kleinere bzw. feinere Struktureinrichtungen angeordnet werden können, die bestimmte Abschnitte der Deckschicht, beispielsweise im Wesentlichen waagrecht verlaufende Abschnitte der Deckschicht, verbessert abstützen. Die verbesserte Abstützung resultiert dabei aus der erhöhten Dichte von Struktureinrichtungen bezogen auf dieselbe Grundfläche der Deckschicht, sodass ein freier unabgestützter Bereich der Deckschicht entsprechend reduziert werden kann.

Daraus ergibt sich der weitere Vorteil, dass der Großteil der Zwischenschicht durch größer skalierte erste Struktureinrichtungen ausgefüllt werden kann, sodass das durch die ersten Struktureinrichtungen gebildete "Gitter" gröber skaliert ist. Dadurch ergeben sich Vorteile hinsichtlich der Masse, da das gröbere Gitter eine niedrigere Volumendichte aufweist, als ein feiner skaliertes zweites Gitter, das lediglich im Bereich der Deckschicht Verwendung findet und durch das zusätzlich Vorsehen zweiter kleiner skalierter Struktureinrichtungen ausgebildet wird.

Ferner kann bei dem Werkzeug vorgesehen sein, dass ein Fließverhalten des wenigstens einen Fluids in der Zwischenschicht durch eine Volumendichte der Struktureinrichtungen in der Zwischenschicht einstellbar oder eingestellt ist. Das Fließverhalten ändert sich dabei in Abhängigkeit der Volumendichte der Struktureinrichtungen in der Zwischenschicht bzw. der Volumendichte der Zwischenschicht. Demnach können die konkreten Fließeigenschaften des Fluids durch die Zwischenschicht durch die Auswahl der Struktureinrichtungen eingestellt werden.

Je nachdem wie die einzelnen Struktureinrichtungen skaliert sind, ändert sich die Volumendichte. Diese Abhängigkeit kann gezielt dazu benutzt werden gewünschte Fließeigenschaften einzustellen, beispielsweise kann die Zwischenschicht sonach ein ungehindertes Abfließen des Fluids ermöglichen, indem die Volumendichte gering genug gewählt ist. Ebenso ist es möglich, dass die Zwischenschicht die Fließeigenschaften reduziert, insbesondere das Fluid speichert und somit beispielsweise wie ein "Schwamm" wirkt indem die Volumendichte entsprechend hoch genug gewählt ist.

Das Werkzeug ist vorteilhafterweise mit mindestens einer Strömungserzeugungseinrichtung derart koppelbar, dass ein definierter Druck des Fluids in der Zwischenschicht einstellbar ist, insbesondere ist dabei ein Überdruck oder ein Unterdruck an wenigstens einer Öffnung in der Deckschicht erzeugbar. Die vorgeschlagene Strömungserzeugungseinrichtung ist sonach dazu ausgebildet ein Fluid in die Zwischenschicht hinein oder aus der Zwischenschicht heraus zu fördern. Dabei kann mittels der Strömungserzeugungseinrichtung ein Druck in dem Fluid eingestellt werden. Beispielweise kann ein Überdruck erzeugt werden, sodass das Fluid durch die Strömungseinrichtung unter Druck in die Zwischenschicht eingebracht wird und von der Zwischenschicht durch Umströmen der Struktureinrichtungen durch die wenigstens eine Öffnung in der Deckschicht in die Kavität einströmen kann.

Daneben ist es ebenso möglich, mittels der Strömungserzeugungseinrichtung einen Unterdruck in dem Fluid zu erzeugen, sodass das Fluid theoretisch aus der Kavität durch die Öffnungen durch die Zwischenschicht zu einem Strömungsauslass gefördert wird. Dies kann Beispielweise dazu verwendet werden, einen Einleger, beispielsweise eine Folie in der Kavität zu halten. Ferner kann das Abkühlen verbessert werden, indem restliches Wasser in dem hergestellten Objekt durch den erzeugten Unterdruck verstärkt verdampft wird.

Daneben betrifft die Erfindung ein Verfahren zur Herstellung eines Werkzeugs, insbesondere eines Werkzeugs nach einem der vorangehenden Ansprüche, mit wenigstens einem wenigstens einen Abschnitt einer Kavität ausbildenden Bereich, wobei das Werkzeug eine Grundschicht und eine über eine Zwischenschicht mit der Grundschicht verbundene, die Kavität zumindest abschnittsweise begrenzende Deckschicht aufweist, wobei die Zwischenschicht von wenigstens einem Fluid zwischen wenigstens einem Strömungseinlass und wenigstens einer in der Deckschicht angeordneten Öffnung durchströmbar ist.

Grundsätzlich kann mittels des erfindungsgemäßen Verfahrens ein erfindungsgemäßes Werkzeug hergestellt werden. Selbstverständlich sind sämtliche Ausführungen, insbesondere die Einzelheiten, Vorteile und Merkmale, die in Bezug auf das erfindungsgemäße Werkzeug dargelegt wurden, auf das erfindungsgemäße Verfahren übertragbar und umgekehrt.

Besonders bevorzugt ist bei dem erfindungsgemäßen Verfahren vorgesehen, dass in der Zwischenschicht wenigstens eine Struktureinrichtung, bevorzugt eine Vielzahl von Struktureinrichtungen angeordnet wird, wobei die Deckschicht über die wenigstens eine Struktureinrichtung mit der Grundschicht verbunden ist und die wenigstens eine Struktureinrichtung von wenigstens einem in der Zwischenschicht geführten Fluid umströmt wird. Bei der Herstellung des erfindungsgemäßen Werkzeugs wird sonach eine Vielzahl von Struktureinrichtungen (wenigstens eine Struktureinrichtung) in der Zwischenschicht angeordnet, die die Deckschicht mit der Grundschicht verbindet, wie zuvor in Bezug auf das erfindungsgemäße Werkzeug beschrieben.

Bei der Konstruktion bzw. der Herstellung des erfindungsgemäßen Werkzeugs ist ferner vorgesehen, dass ein Einheitsvolumen definiert wird, das größer ist, als das Volumen der Zwischenschicht, wobei das Einheitsvolumen, insbesondere gleichmäßig, mit miteinander verbundenen Struktureinrichtungen ausgefüllt wird und anschließend die Schnittmenge zwischen dem Einheitsvolumen und der Zwischenschicht gebildet wird, welche Schnittmenge die Position der einzelnen Struktureinrichtungen festlegt. Jede der Struktureinrichtungen kann somit als Einheitszelle aufgefasst werden, wobei das Einheitsvolumen mit aneinander angeordneten Einheitszellen gefüllt wird.

Demnach ist vorgesehen, dass ein Einheitsvolumen definiert wird, das größer ist als das Volumen der herzustellenden Zwischenschicht des herzustellenden Werkzeugs. Das definierte Einheitsvolumen wird anschließend definiert mit Struktureinrichtungen ausgefüllt, die sich nahtlos aneinander anfügen, wie zuvor beschrieben. Anschließend wird die Schnittmenge zwischen der Zwischenschicht und dem Einheitsvolumen gebildet, wobei somit die Anordnung der Struktureinrichtungen in der Zwischenschicht festgelegt wird.

Dadurch wird eine relative bzw. annähernde Isotropie in der Zwischenschicht erreicht, die neben der näherungsweisen isotropen Aufnahme bzw. Abstützung von Kräften und/oder Innendrücken auch eine näherungsweise isotrope Führung des Fluids in der Zwischenschicht ermöglicht. Die Strömungseigenschaften des in der Zwischenschicht geführten Fluids sind somit weitgehend unabhängig von der Strömungsrichtung in der Zwischenschicht, da die in der Zwischenschicht angeordneten Struktureinrichtungen, die von dem Fluid umströmt werden, näherungsweise isotrop ausgebildet sind.

Ein weiterer Vorteil besteht darin, dass es nicht notwendig ist, die Position der einzelnen Struktureinrichtungen für jedes Werkzeug einzeln zu definieren, um die Zwischenschicht sonach individuell auf das Werkzeug anzupassen und somit die Zwischenschicht für jedes Werkzeug zu konstruieren. Stattdessen ist es möglich, ein Einheitsvolumen zu definieren, das die Position der einzelnen Struktureinrichtungen festlegt. Durch die näherungsweise Isotropie, die durch die Struktureinrichtungen erreicht wird, ist es somit möglich, eine Verteilung bzw. Anordnung der Struktureinrichtungen werkzeugunabhängig vorzunehmen.

Dazu wird, wie bereits beschrieben, ein Einheitsvolumen werkzeugunabhängig definiert, wobei lediglich sichergestellt wird, dass das Einheitsvolumen größer ist als die Zwischenschicht des jeweiligen herzustellenden Werkzeugs. Anschließend wird die Schnittmenge aus dem Einheitsvolumen und der Zwischenschicht des herzustellenden Werkzeugs gebildet, sodass die Positionen der einzelnen Struktureinrichtungen bereits durch das Einheitsvolumen festgelegt sind und nicht individuell festgelegt bzw. in die herzustellende Zwischenschicht konstruiert werden müssen. Dies verringert den Aufwand bei der Konstruktion bzw. Herstellung des Werkzeugs erheblich.

Ferner ist anzumerken, dass, insbesondere bei einer additiven Fertigung des Werkzeugs, die einzelnen Struktureinrichtungen nicht als Einzelteile verstanden werden müssen. Das "Gitter", das sich aus der Aneinanderreihung der einzelnen Struktureinrichtungen ergibt, kann bevorzugt durch den additiven Fertigungsprozess einteilig ausgeführt sein. Somit kann die Vielzahl der Struktureinrichtungen in der Zwischenschicht, insbesondere die gesamte Zwischenschicht, materialeinheitlich und/oder einstückig ausgeführt sein. Dabei ist es jedoch möglich Trennungen wie beispielsweise Trennfugen in dem ausgebildeten Gitter vorzusehen.

Daneben betrifft die Erfindung ein Verfahren zur Verwendung eines erfindungsgemäßen Werkzeugs zur Herstellung von Objekten, insbesondere Objekte aus schäumbaren Kunststoffpartikeln. Bei dem erfindungsgemäßen Verfahren ist vorgesehen, dass ein Fluid mittels einer Strömungserzeugungseinrichtung in einen Strömungseinlass in der Zwischenschicht gefördert wird. Das entsprechende Fluid kann, wie zuvor beschrieben, über wenigstens eine Öffnung in der Deckschicht in die Kavität gelangen, um die dort angeordneten Kunststoffpartikel zu schäumen.

Selbstverständlich sind sämtliche in Bezug auf das Werkzeug und/oder das Verfahren zur Herstellung des Werkzeugs dargelegten Ausführungen vollständig auf das erfindungsgemäße Verfahren zur Verwendung des Werkzeugs übertragbar.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: ein erfindungsgemäßes Werkzeug in einer geschnittenen Darstellung;
- Fig. 2: eine Struktureinrichtung des erfindungsgemäßen Werkzeugs von Fig. 1 gemäß einem ersten Ausführungsbeispiel;
- Fig. 3: einen Ausschnitt einer Zwischenschicht des Werkzeugs von Fig. 1 in Draufsicht;
- Fig. 4: den Ausschnitt der Zwischenschicht von Fig. 3 in seitlicher Ansicht;
- Fig. 5: eine Struktureinrichtung des erfindungsgemäßen Werkzeugs von Fig. 1 gemäß einem zweiten Ausführungsbeispiel;
- Fig. 6: eine Struktureinrichtung des erfindungsgemäßen Werkzeugs von Fig. 1 gemäß einem dritten Ausführungsbeispiel;
- Fig. 7: eine Struktureinrichtung des erfindungsgemäßen Werkzeugs von Fig. 1 gemäß einem vierten Ausführungsbeispiel; und
- Fig. 8: eine Struktureinrichtung des erfindungsgemäßen Werkzeugs von Fig. 1 gemäß einem fünften Ausführungsbeispiel.

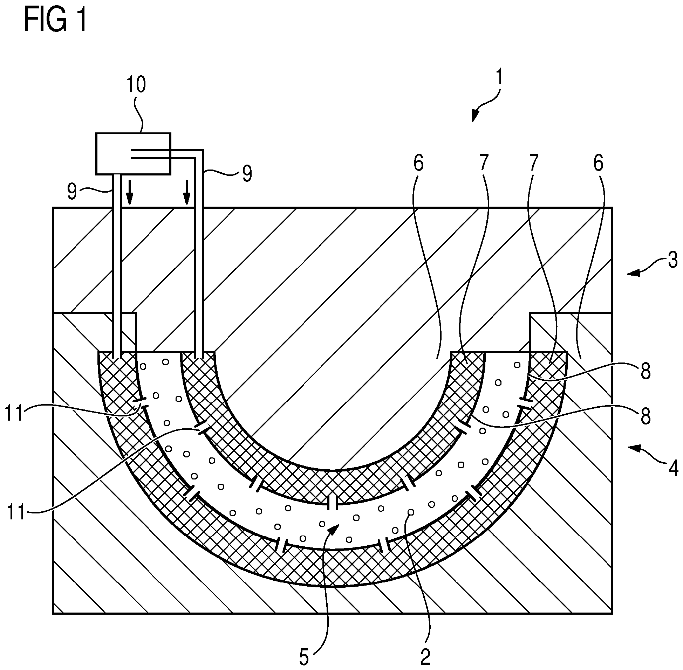

Fig. 1 zeigt ein Werkzeug 1, das als Schäumwerkzeug zur Verarbeitung schäumbarer Kunststoffpartikel ausgebildet ist. In dem in Fig. 1 gezeigten Ausführungsbeispiel wird ein Objekt 2 aus schäumbaren Kunststoffpartikeln hergestellt. Das Werkzeug 1 umfasst zwei Teile 3, 4, die zusammen eine Kavität 5 ausbilden, in der das Objekt 2 hergestellt wird. Die beiden Teile 3, 4 können beispielsweise als Werkzeughälften aufgefasst werden.

Das Werkzeug 1 bzw. jeder seiner beiden Teile 3, 4 weist eine Grundschicht 6 und eine über eine Zwischenschicht 7 mit der Grundschicht verbundene, die Kavität 5 zumindest abschnittsweise begrenzende, zumindest abschnittsweise formgebende Deckschicht 8 auf. Mit anderen Worten sind die Deckschichten 8 jedes der beiden Teile 3, 4 mit der entsprechenden Grundschicht 6 über die dazwischen angeordnete Zwischenschicht 7 verbunden. Die Deckschichten 8 weisen formgebende Eigenschaften auf und begrenzen die Kavität 5. Der Aufbau der Zwischenschicht 7 wird nachfolgend beschrieben.

Die Zwischenschichten 7 weisen Strömungseinlässe 9 auf, durch die ein Fluid in die Zwischenschichten 7 einströmbar ist. Dazu ist das Werkzeug 1 mit einer Strömungserzeugungseinrichtung 10 gekoppelt, die das Fluid unter Druck in die Strömungseinlässe 9 einspeist. Die Zwischenschichten 7 sind daher als medienführend zu bezeichnen, da diese das Fluid führen. Als Fluid wird beispielsweise heißer Wasserdampf verwendet.

Das unter Druck stehende Fluid wird sonach durch die Zwischenschicht 7 zu einer Vielzahl von Öffnungen 11 in den Deckschichten 8 geleitet. Mit anderen Worten strömt das Fluid durch die Strömungseinlässe 9 (selbstverständlich können mehrere Strömungseinlässe 9 pro Zwischenschicht 7 vorgesehen sein) in die Zwischenschicht 7 ein und wird dort zu den Öffnungen 11 in den Deckschichten 8 geführt. Von den Öffnungen 11 in den Deckschichten 8 strömt das Fluid in die Kavität 5 ein, wo es die dort angeordneten schäumbaren Kunststoffpartikeln zur Herstellung des Objekts 2 schäumt. Die Öffnungen 11 können beispielweise als makroskopische Öffnungen und/oder Mikrokanäle und/oder Poren in der Deckschicht 8 ausgebildet sein.

Ersichtlich ist die Zwischenschicht 7 nicht leer, sondern weist Struktureinrichtungen 12 auf, mittels derer die jeweilige Grundschicht 6 mit der Deckschicht 8 verbunden ist. Die entsprechende Deckschicht 8 ist sonach über die Struktureinrichtungen 12 an der Grundschicht 6 abgestützt. Die Deckschicht 8 kann sonach im Vergleich zu der Grundschicht 6 erheblich dünner, insbesondere filigran ausgeführt werden, sodass die Deckschicht 8 im Verhältnis wenig Masse besitzt und sonach eine geringe thermische Trägheit aufweist, im Vergleich zu einem Werkzeug dessen Kavität durch eine Wand mit höherer Wandstärke begrenzt ist.

Gleichzeitig ist die Zwischenschicht 7 medienführend, da diese dazu ausgebildet ist, das Fluid, das über die Strömungseinlässe 9 eingespeist wird, zu den Öffnungen 11 in der Deckschicht 8 zu leiten.

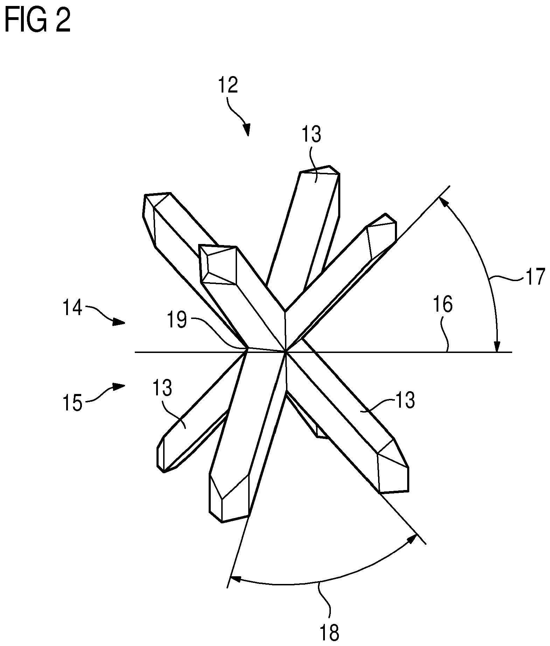

Fig. 2 zeigt eine Struktureinrichtung 12 gemäß einem ersten Ausführungsbeispiel. Die Struktureinrichtung 12 weist acht Strukturelemente 13 auf, wobei die Struktureinrichtung 12 in eine erste Hälfte 14 und eine zweite Hälfte 15 (virtuell) geteilt werden kann. Beispielhaft ist die Struktureinrichtung 12 durch eine Ebene 16 in die zwei Hälften 14, 15 geteilt. Selbstverständlich wäre es ebenso möglich, die Struktureinrichtung 12 entlang einer senkrecht zu der Ebene 16 verlaufenden Ebene oder eine zu dieser Ebene um 90° gedrehte Ebene zu teilen. Mit anderen Worten kann die Struktureinrichtung beliebig aufgeteilt werden, sodass jede Hälfte 14, 15 vier Strukturelemente 13 aufweist.

Die Strukturelemente 13 sind dabei unter einem Winkel 17 gegenüber der Ebene 16 angeordnet und unterhalb eines Winkels 18 gegenüber einem benachbarten Strukturelement 13 der gleichen Hälfte 14, 15 angeordnet. Insbesondere betragen die beiden Winkel 17, 18 jeweils 45°.

Fig. 2 zeigt ferner, dass die einzelnen Strukturelemente 13 an einem Knotenabschnitt 19 der Struktureinrichtung 12 zusammenlaufen bzw. von dem Knotenabschnitt 19 radial abstehen. Jeweils zwei der acht Strukturelemente 13, die auf einer Linie liegen, könnten zu einem Strukturelement 13 zusammengefasst werden, sodass die Struktureinrichtung 12 letztlich aus vier Strukturelementen 13 besteht, die sich in dem Knotenabschnitt 19 schneiden. Im Rahmen dieser Anmeldung wird jedoch davon ausgegangen, dass jedes der Strukturelemente 13, das sich von dem Knotenabschnitt 19 weg erstreckt als Strukturelement 13 bezeichnet wird.

Der Querschnitt jedes der Strukturelemente 13 ist im Rahmen dieser Anmeldung rechteckig dargestellt, wobei es ebenso möglich ist, jeden beliebigen anderen Querschnitt bzw. jede Querschnittsform der Strukturelemente 13 vorzusehen, beispielsweise rund.

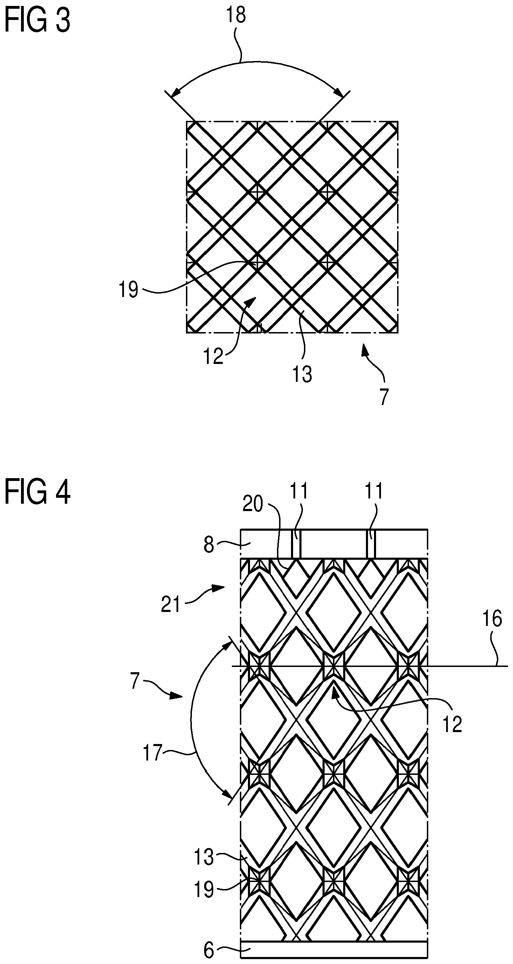

Wie zuvor beschrieben, ist die Zwischenschicht 7 eines jeden Teils 3, 4 des Werkzeugs 1 mit einer Vielzahl von Struktureinrichtungen 12 ausgefüllt. Eine Draufsicht auf einen Teil der Zwischenschicht 7 des Werkzeugs 1 ist in Fig. 3 dargestellt. Ersichtlich weist die Zwischenschicht 7 eine Vielzahl von Struktureinrichtungen 12 auf, die nahtlos mit ihren Strukturelementen 13 aneinander anschließen. Entsprechend ergeben sich Knotenpunkte 19, in denen die jeweiligen Strukturelemente 13 aneinander angrenzen. Letztlich kann jede der Struktureinrichtungen 12 als "Einheitszelle" verstanden werden, wobei das Volumen der Zwischenschicht 7 durch aneinandergrenzende Einheitszellen gefüllt ist.

Fig. 3 zeigt ferner, dass die einzelnen Struktureinrichtungen 12 möglichst isotrop ausgeführt sind, sodass die Zwischenschicht 7 über das Volumen näherungsweise gleiche Eigenschaften aufweist. Ferner ist ersichtlich, dass das in die Zwischenschicht 7 eingeleitete Fluid durch die Zwischenräume zwischen den Struktureinrichtungen 12 strömen kann. Dabei kann eine Skalierung der Struktureinrichtungen 12 vorgenommen werden, sodass die Fließeigenschaften des in der Zwischenschicht 7 strömenden Fluids gezielt beeinflusst werden können. Insbesondere kann dabei ein nahezu ungehindertes Fließverhalten des Fluids erreicht werden. Ebenso ist es möglich, die Gitterstruktur, die durch die einzelnen Struktureinrichtungen 12 gebildet wird, als "Schwamm" wirken zu lassen, sodass das Fluid nicht abfließt, sondern zumindest teilweise gespeichert wird.

Fig. 4 zeigt eine seitliche Ansicht eines Teils der Zwischenschicht 7. Aus den Fig. 3 und 4 geht hervor, dass jede der Struktureinrichtungen 12 von weiteren Struktureinrichtungen 12 umgeben ist, das Volumen der Zwischenschicht 7 sonach durch die Einheitszellen, die durch jeweils eine Struktureinrichtung 12 gebildet werden, ausgefüllt ist. Sowohl in der Ebene, die in Fig. 3 gezeigt ist, ist jede Struktureinrichtung 12 von weiteren Struktureinrichtungen 12 umgeben, als auch in der in Fig. 4 dargestellten Darstellung weist jede Struktureinrichtung 12 (mit Ausnahme der Struktureinrichtungen 12, die an die Grundschicht 6 und die Deckschicht 8 grenzen), oberhalb und unterhalb weitere Struktureinrichtungen 12 auf.

Das Werkzeug 1 ist bevorzugterweise durch einen additiven Herstellungsprozess gefertigt, bei dem die Grundschicht 6 und/oder die Zwischenschicht 7 und/oder die Deckschicht 8 additiv, insbesondere schichtweise gefertigt wird. Dabei wird schrittweise und schichtweise Baumaterial aufgetragen und selektiv verfestigt, sodass sich die Zwischenschicht 7 ergibt. Aus Fig. 4 ist ersichtlich, dass die Deckschicht 8 durch das Gerüst bzw. Gitter, das aus den einzelnen Struktureinrichtungen 12 besteht, getragen wird und auf die Deckschicht 8 wirkende Kräfte durch die Struktureinrichtungen 12 aufgenommen und in die Grundschicht 6 geleitet werden. Somit kann die Deckschicht 8 als solche filigraner ausgebildet werden, was die thermische Trägheit des Werkzeugs 1 deutlich reduziert.

Ferner zeigt Fig. 4, dass wenigstens eine weitere Sorte von Struktureinrichtungen 20 vorgesehen ist. Die Struktureinrichtungen 20 sind kleiner skaliert als die Struktureinrichtungen 12 und können sonach zwischen den Strukturelementen 13 einer Hälfte 14 der obersten Lage 21 von Struktureinrichtungen 12 angeordnet werden. Dabei ist die Lage aus Struktureinrichtungen 20 lediglich aus unteren Hälften 15 gebildet, die die Deckschicht 8 tragen und diese sind an den Strukturelementen 13 der oberen Hälfte 14 der obersten Lage 21 von Struktureinrichtungen 12 abgestützt.

Dadurch ist es möglich, die Volumendichte lediglich im Bereich der Deckschicht 8, insbesondere im Bereich von waagrechten Stellen der Deckschicht 8, zu erhöhen, um dort eine verbesserte Abstützung der Deckschicht 8 zu gewährleisten. Die Volumendichte im übrigen Bereich der Zwischenschicht 7 kann gering ausgeführt bleiben, da das Gitter dort gröber ausgeführt ist, aufgrund der größer skalierten Struktureinrichtungen 12.

Ferner kann jedes der Strukturelemente 13, insbesondere aneinander anschließender Strukturelemente 13, die im selben Knotenabschnitt 19 angeordnet sind, hohl ausgeführt werden und sonach ein weiteres Fluid führen. Dadurch ergeben sich Fluidkanäle in der Gitterstruktur, die aus den in den Strukturelementen 13 der Struktureinrichtungen 12, 20 ausgebildeten und miteinander verbundenen Hohlräumen gebildet werden.

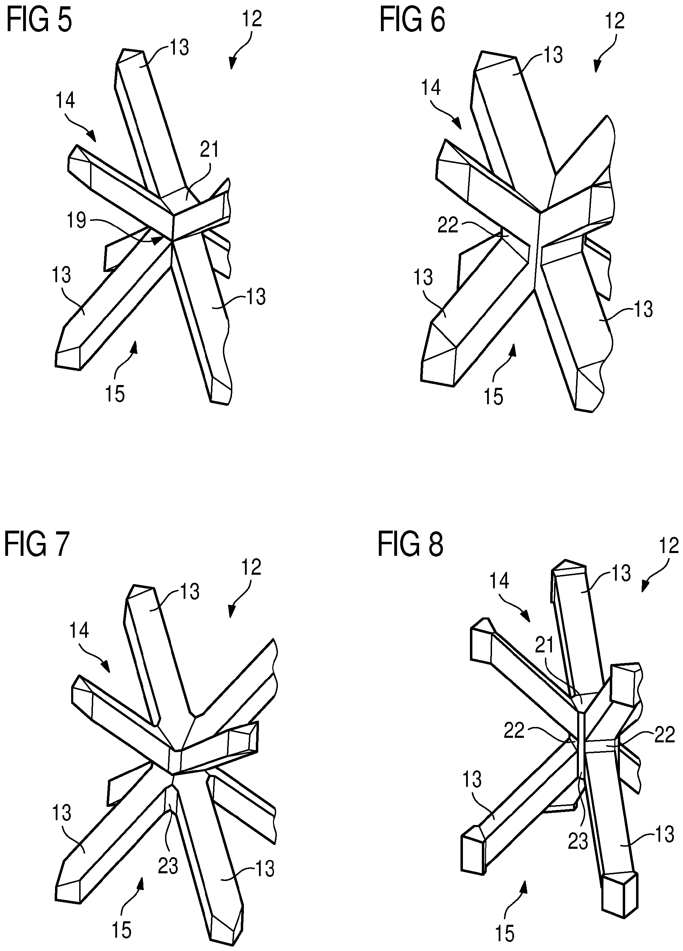

Fig. 5 zeigt eine Struktureinrichtung 12 gemäß einem zweiten Ausführungsbeispiel. An dem Knotenabschnitt 19 weist die gezeigte Struktureinrichtung 12 eine Fase 21 auf, die die vier Strukturelemente 13 der oberen Hälfte 14 der Struktureinrichtungen 12 miteinander verbindet. Durch die Fase 21 können Kerbspannungen auf die Strukturelemente 13 reduziert werden. Ebenso ist es möglich die vier Strukturelemente 13 der unteren Hälfte 15 der Struktureinrichtung 12 durch eine entsprechende Fase 21 miteinander zu verbinden.

Fig. 6 zeigt eine Struktureinrichtung 12 gemäß einem dritten Ausführungsbeispiel. Ersichtlich sind gemäß dem in Fig. 6 gezeigten Ausführungsbeispiel jeweils zwei Strukturelemente 13, die übereinander angeordnet sind und verschiedenen Hälften 14, 15 der Struktureinrichtung 12 angehören, über eine Fase 22 miteinander verbunden. Somit sind die in Hochrichtung, also von der Grundschicht 6 zur Deckschicht 8 verlaufende, übereinander angeordneten Strukturelemente 13, die besonders bevorzugt als Streben ausgebildet sind, über eine Fase 22 miteinander verbunden.

Fig. 7 zeigt eine weitere Variante einer Struktureinrichtung 12, wobei jeweils zwei Strukturelemente 13 des oberen Kranzes bzw. der oberen Hälfte 14 der Struktureinrichtung 12 über eine Fase 23 miteinander verbunden sind. Ebenso zeigt Fig. 7, dass jeweils zwei in Umfangsrichtung benachbarte Strukturelemente 13 der Struktureinrichtung 12, die in der unteren Hälfte 15 der Struktureinrichtung 12 angeordnet sind, über eine entsprechende Fase 23 miteinander verbunden sind. Selbstverständlich können die anderen nicht dargestellten Strukturelemente 13 ebenfalls mit entsprechenden Fasen 23 miteinander verbunden sein.

Schließlich zeigt Fig. 8 eine Kombination der dargestellten Fasen 21 - 23, wobei die vier Strukturelemente 13 der oberen Hälfte 14 der Struktureinrichtung 12 über eine Fase 21 miteinander verbunden sind und die Strukturelemente 13, die in Umfangsrichtung benachbart sind, sowohl der Hälfte 14 als auch der Hälfte 15 mittels durchgehenden Fasen 23 miteinander verbunden sind. Des Weiteren sind übereinander angeordnete Strukturelemente 13 über eine Fase 22 miteinander verbunden. Ersichtlich zeigt Fig. 8 die in den Fig. 5 bis 7 dargestellten Fasen 21 - 23 in einer Struktureinrichtung 12 vereint. Grundsätzlich sind sämtliche dargestellten Ausführungsformen beliebig miteinander kombinierbar, sodass auch einzelne Fasen 21 - 23 beliebig miteinander kombiniert werden können und an wenigstens einer Struktureinrichtung 12 vorgesehen sein können. Des Weiteren sind die Winkel 17, 18 weitgehend beliebig wählbar.

Nachfolgend soll auf das Herstellungsverfahren des Werkzeugs 1 eingegangen werden. Um ein Werkzeug 1 bzw. dessen Teile 3, 4 herzustellen, wird ein Einheitsvolumen definiert, das größer ist als die herzustellende(n) Zwischenschicht(en) 7. Die Zwischenschicht 7 kann nachfolgend in dem Einheitsvolumen aufgenommen bzw. innerhalb dessen angeordnet werden. Das Einheitsvolumen wird anschließend gleichmäßig mit Struktureinrichtungen 12 ausgefüllt, sodass sich ein Gitter (beispielsweise so wie in den Fig. 3 und 4 gezeigt) ergibt. Anschließend wird aus der in dem Einheitsvolumen aufgenommenen Zwischenschicht 7 und dem Einheitsvolumen selbst die Schnittmenge gebildet, sodass sich die Positionen der einzelnen Struktureinrichtungen 12 in der Zwischenschicht 7 ergeben. Im Randbereich der Zwischenschicht 7 sind somit Bereiche vorhanden, in denen Struktureinrichtungen 12 nicht ganz in das Volumen der Zwischenschicht 7 passen. Diese werden somit nur teilweise gefertigt.

In Bereichen, in denen dies erforderlich ist, insbesondere in weitgehend waagrechten Bereichen der Deckschicht 8 werden zusätzliche Struktureinrichtungen 20 vorgesehen, um eine verbesserte Stützeigenschaft für derartige Bereiche zu bewirken. Die Struktureinrichtungen 20 sind dabei kleiner skaliert als die Struktureinrichtungen 12 und stützen sich mittig an den Strukturelementen 13 der oberen Hälfte 14 der entsprechenden obersten Lage 21 von Struktureinrichtungen 12 ab.

Das dargestellte Werkzeug 1 ist insbesondere zur Herstellung von schäumbaren Kunststoffpartikeln zur Herstellung von Objekten 2 verwendbar. Selbstverständlich kann somit das erfindungsgemäße Verfahren zur Herstellung von aus schäumbaren Kunststoffpartikeln gebildeten Objekten auf dem gezeigten Werkzeug 1 ausgeführt werden. Ferner kann das gezeigte Werkzeug 1 durch ein erfindungsgemäßes Herstellungsverfahren hergestellt werden. Die in den einzelnen Ausführungsbeispielen gezeigten Ausführungsformen sind selbstverständlich beliebig und einander kombinierbar.

### BEZUGSZEICHENLISTE

1 Werkzeug
2 Objekt
3 Teil
4 Teil
5 Kavität
6 Grundschicht
7 Zwischenschicht
8 Deckschicht
9 Strömungseinlass
10 Strömungserzeugungseinrichtung
11 Öffnung
12 Struktureinrichtung
13 Strukturelement
14 Hälfte
15 Hälfte
16 Ebene
17 Winkel
18 Winkel
19 Knotenabschnitt
20 Struktureinrichtung
21 Fase
22 Fase
23 Fase

## Patentansprüche

1. Werkzeug (1), insbesondere Schäumwerkzeug zur Verarbeitung schäumbarer Kunststoffpartikel, mit wenigstens einem wenigstens einen Abschnitt einer Kavität (5) ausbildenden Bereich, wobei das Werkzeug (1) eine Grundschicht (6) und eine über eine Zwischenschicht (7) mit der Grundschicht (6) verbundene, die Kavität (5) zumindest abschnittsweise begrenzende, zumindest abschnittsweise formgebende Deckschicht (8) aufweist, wobei die Zwischenschicht (7) von wenigstens einem Fluid zwischen wenigstens einem Strömungseinlass (9) und wenigstens einer in der Deckschicht (8) angeordneten Öffnung (11) durchströmbar ist, wobei in der Zwischenschicht (7) eine Vielzahl von Struktureinrichtungen (12, 20) angeordnet ist, wobei die Deckschicht (8) über die Struktureinrichtungen (12, 20) mit der Grundschicht (6) verbunden ist und die Struktureinrichtungen (12, 20) von dem wenigstens einen in der Zwischenschicht (7) geführten Fluid umströmt sind, **dadurch gekennzeichnet, dass** jede Struktureinrichtung (12, 20) eine definierte Anzahl an Strukturelementen (13), insbesondere eine Strebe, aufweist, die sich von einem Zentrum der Struktureinrichtung (12, 20) weg erstrecken, wobei die Strukturelemente (13) die Struktureinrichtung (12, 20) mit der Grundschicht (6) oder der Deckschicht (8) oder wenigstens einer anderen Struktureinrichtung (12, 20) verbindet.

2. Werkzeug nach Anspruch 1, **dadurch gekennzeichnet, dass** die wenigstens eine Struktureinrichtung (12, 20) wenigstens sechs, bevorzugt acht, Strukturelemente (13) aufweist, wobei die wenigstens eine Struktureinrichtung (12, 20) mit den wenigstens sechs, bevorzugt acht, Strukturelementen (13) mit wenigstens einer weiteren Struktureinrichtung (12, 20) und/oder der Deckschicht (8) und/oder der Grundschicht (6) verbunden ist.

3. Werkzeug nach Anspruch 2, **gekennzeichnet durch** wenigstens einem Knotenabschnitt (19), von dem sich wenigstens zwei Strukturelemente (13), insbesondere kranzförmig oder sternförmig, weg erstrecken.

4. Werkzeug nach Anspruch 3, **dadurch gekennzeichnet, dass** jeweils wenigstens drei, bevorzugt vier, Strukturelemente (13) einer Hälfte (14, 15) der Struktureinrichtung (12, 20) zugeordnet sind, wobei jede Hälfte (14, 15) einen Kranz von Strukturelementen (13) ausbildet und die beiden Hälften (14, 15) an dem Knotenabschnitt (19) verbunden sind.

5. Werkzeug nach Anspruch 3 oder 4, **dadurch gekennzeichnet, dass** sich die wenigstens sechs, insbesondere acht, Strukturelemente (13) unter einem definierten Winkel (17, 18), bevorzugt unter 45° gegenüber einer Mittelebene (16) durch den Knotenabschnitt (19) und/oder 45° gegenüber einer senkrecht auf der Mittelebene stehenden Längsebene durch den Knotenabschnitt (19), von dem Knotenabschnitt (19) weg erstrecken.

6. Werkzeug nach einem der Ansprüche 3 bis 5, **dadurch gekennzeichnet, dass** zwischen zwei miteinander verbundenen Struktureinrichtungen (12, 20) ein Knotenabschnitt (19) ausgebildet ist.

7. Werkzeug nach einem der vorangehenden Ansprüche 2 bis 6, **dadurch gekennzeichnet, dass** wenigstens ein Strukturelement (13) einen zumindest abschnittsweise runden und/oder eckigen, insbesondere rechteckigen, Querschnitt aufweist.

8. Werkzeug nach einem der vorangehenden Ansprüche 2 bis 7, **dadurch gekennzeichnet, dass** zwischen wenigstens einem Strukturelement (13) der ersten Hälfte (14, 15) wenigstens einer Struktureinrichtung (12, 20) und wenigstens einem anderen Strukturelement der anderen Hälfte (14, 15) der Struktureinrichtung (12, 20) eine Fase (21 - 23) ausgebildet ist.

9. Werkzeug nach einem der vorangehenden Ansprüche 2 bis 8, **dadurch gekennzeichnet, dass** wenigstens ein Strukturelement (13), bevorzugt mehrere miteinander verbundene Strukturelemente (13), wenigstens einen Fluidkanal aufweist, welcher Fluidkanal von wenigstens einem Fluid durchströmbar ist.

10. Werkzeug nach einem der Ansprüche 2 bis 8, **dadurch gekennzeichnet, dass** in der Zwischenschicht (7), insbesondere im Bereich eines im Wesentlichen waagrechten Abschnitts der Deckschicht (8), wenigstens zwei voneinander verschiedene, insbesondere unterschiedlich skalierte, Struktureinrichtungen (12, 20) angeordnet sind.

11. Werkzeug nach einem der vorangehenden Ansprüche, **dadurch gekennzeichnet, dass** ein Fließverhalten des wenigstens einen Fluids in der Zwischenschicht (7) durch eine Volumendichte der Struktureinrichtungen (12, 20) in der Zwischenschicht (7) einstellbar oder eingestellt ist.

12. Werkzeug nach einem der vorangehenden Ansprüche, **dadurch gekennzeichnet, dass** das Werkzeug (1) mit wenigstens einer Strömungserzeugungseinrichtung (10) derart koppelbar ist, dass ein definierter Druck des Fluids in der Zwischenschicht (7) einstellbar ist, insbesondere ein Überdruck oder Unterdruck an wenigstens einer Öffnung (11) in der Deckschicht (8) erzeugbar ist.

13. Verfahren zur Herstellung eines Werkzeugs (1), insbesondere eines Werkzeugs (1) nach einem der vorangehenden Ansprüche, mit wenigstens einem wenigstens einen Abschnitt einer Kavität (5) ausbildenden Bereich, wobei das Werkzeug (1) eine Grundschicht (6) und eine über eine Zwischenschicht (7) mit der Grundschicht (6) verbundene, die Kavität (5) zumindest Abschnittsweise begrenzende Deckschicht (8) aufweist, wobei die Zwischenschicht (7) von wenigstens einem Fluid zwischen wenigstens einem Strömungseinlass (9) und wenigstens einer in der Deckschicht (8) angeordneten Öffnung (11) durchströmbar ist, wobei in der Zwischenschicht (7) wenigstens eine Struktureinrichtung (12, 20), bevorzugt eine Vielzahl von Struktureinrichtungen (12, 20), angeordnet wird, wobei die Deckschicht (8) über die wenigstens eine Struktureinrichtung (12, 20) mit der Grundschicht (6) verbunden ist und die wenigstens eine Struktureinrichtung (12, 20) von dem wenigstens einen in der Zwischenschicht (7) geführten Fluid umströmt wird, **dadurch gekennzeichnet, dass** ein Einheitsvolumen definiert wird, das größer ist, als das Volumen der Zwischenschicht (7), wobei das Einheitsvolumen, insbesondere gleichmäßig, mit miteinander verbundenen Struktureinrichtungen (12, 20) ausgefüllt wird und anschließend die Schnittmenge zwischen dem Einheitsvolumen und der Zwischenschicht (7) gebildet wird, welche Schnittmenge die Position der einzelnen Struktureinrichtungen (12, 20) festlegt.

14. Verfahren zur Verwendung eines Werkzeugs, insbesondere eines Schäumwerkzeugs, zur Herstellung eines Objekts (2) aus schäumbaren Kunststoffpartikeln, mit wenigstens einem wenigstens einen Abschnitt einer Kavität (5) ausbildenden Bereich, **dadurch gekennzeichnet, dass** ein Werkzeug (1) nach einem der Ansprüche 1 bis 12 verwendet wird.

## Claims

1. Tool (1), in particular foaming tool, for processing foamable plastic particles, with at least one region forming at least one portion of a cavity (5), wherein the tool (1) comprises a base layer (6) and a cover layer (8) which at least partially forms the cavity (5) and is connected to the base layer (6) via an intermediate layer (7), wherein the intermediate layer (7) can be flowed through by at least one fluid between at least one flow inlet (9) and at least one opening (11) arranged in the cover layer (8), wherein a plurality of structured members (12, 20) is arranged in the intermediate layer (7), wherein the cover layer (8) is connected to the base layer (6) via the structured members (12, 20) and the at least one fluid guided in the intermediate layer (7) flows around the periphery of the structured members (12, 20),
**characterized in that**
each structured member (12, 20) comprises a defined number of structured elements (13), in particular a strut, which extend away from a center of the structured member (12, 20), wherein the structured elements (13) connect the structured member (12, 20) to the base layer (6) or cover layer (8) or at least one other structured member (12, 20).

2. Tool according to claim 1, **characterized in that** the at least one structured member (12, 20) comprises at least six, preferably eight, structured elements (13), wherein the at least one structured member (12, 20) with the at least six, preferably eight, structured elements (13) is connected to at least one further structured member (12, 20) and/or to the cover layer (8) and/or to the base layer (6).

3. Tool according to claim 2, **characterized by** at least one node portion (19), from which at least two structured elements (13) extend away in a crown or star shape.

4. Tool according to claim 3, **characterized in that** in each case at least three, preferably four, structured elements (13) are associated with one half (14, 15) of the structured member (12, 20), wherein each half (14, 15) forms a ring of structured elements (13) and the two halves (14, 15) are connected at the node portion (19).

5. Tool according to claim 3 or 4, **characterized in that** the at least six, in particular eight, structured elements (13) extend at a defined angle (17, 18), preferably at 45° with respect to a central plane (16) through the node portion (19) and/or at 45° with respect to a longitudinal plane, extending perpendicularly to the central plane, through the node portion (19) away from the node portion (19).

6. Tool according to any one of claims 3 to 5, **characterized in that** a node portion (19) is formed between two interconnected structured members (12, 20).

7. Tool according to any of the preceding claims 2 to 6, **characterized in that** at least one structured element (13) has a cross-portion which is at least in places round and/or angular, in particular rectangular.

8. Tool according to any one of the preceding claims 2 to 7, **characterized in that** a chamfer (21 - 23) is formed between at least one structured element (13) of the first half (14, 15) of at least one structured member (12, 20) and at least one further structured element of the other half (14, 15) of the structured member (12, 20).

9. Tool according to any one of claims 2 to 8, **characterized in that** at least one structured element (13), preferably a plurality of interconnected structured elements (13), comprises at least one fluid channel, through which fluid channel at least one fluid can flow.

10. Tool according to any one of claims 2 to 8, **characterized in that** at least two different structured members (12, 20), in particular with different scaling, are arranged in the intermediate layer (7), in particular in the region of a substantially horizontal cross-portion of the cover layer (8).

11. Tool according to any of the preceding claims, **characterized in that** a flow behavior of the at least one fluid in the intermediate layer (7) can be set or is set by a volume density of the structured members (12, 20) in the intermediate layer (7).

12. Tool according to any of the preceding claims, **characterized in that** the tool (1) can be coupled to at least one flow-generating device (10) in such a way that a defined fluid pressure can be set in the intermediate layer (7), in particular an overpressure or underpressure can be generated at at least one opening (11) in the cover layer (8).

13. Method for producing a tool (1), in particular a tool (1) according to any one of the preceding claims, with at least one region forming at least one portion of a cavity (5), wherein the tool (1) comprises a base layer (6) and a cover layer (8) delimiting the cavity at least in portions, connected to the base layer (6) via an intermediate layer (7), wherein at least one fluid can flow through the intermediate layer (7) between at least one flow inlet (9) and at least one opening (11) arranged in the cover layer (8), wherein
at least one structured member (12, 20), preferably a plurality of structured members (12, 20), is arranged in the intermediate layer (7), wherein the cover layer (8) is connected to the base layer (6) via the at least one structured member (12, 20) and the at least one structured member (12, 20) is flowed through at the periphery by the at least one fluid guided in the intermediate layer (7),
**characterized in that**
a unit volume is defined, which is larger than the volume of the intermediate layer (7), wherein the unit volume is filled, in particular homogeneously, with structured members (12, 20) connected to one another and then the intersection between the unit volume and the intermediate layer (7) is formed, which intersection fixes the position of the individual structured members (12, 20).

14. Method for using a tool, in particular a foaming tool, for producing an object (2) from expandable plastic particles, with at least one region forming at least one portion of a cavity (5), **characterized in that** a tool (1) according to any one of claims 1 to 12 is used.

## Revendications

1. Moule (1), en particulier moule de moussage, destiné à traiter des particules de matière plastique expansibles, avec au moins une zone réalisant au moins une section d'une empreinte (5), dans lequel le moule (1) présente une couche de base (6) et une couche de recouvrement (8) façonnant au moins en partie, délimitant au moins en partie l'empreinte (5), reliée à la couche de base (6) par l'intermédiaire d'une couche intermédiaire (7), dans lequel la couche intermédiaire (7) peut être traversée par au moins un fluide entre au moins une entrée d'écoulement (9) et au moins un orifice (11) disposé dans la couche de recouvrement (8), dans lequel une pluralité de dispositifs structurés (12, 20) est disposée dans la couche intermédiaire (7), dans lequel la couche de recouvrement (8) est reliée à la couche de base (6) par l'intermédiaire des dispositifs structurés (12, 20) et les dispositifs structurés (12, 20) sont parcourus en périphérie par l'au moins un fluide guidé dans la couche intermédiaire (7),
**caractérisé en ce que**
chaque dispositif structuré (12, 20) présente un nombre défini d'éléments structurés (13), en particulier une entretoise, qui s'étendent de manière à s'éloigner d'un centre du dispositif structuré (12, 20), dans lequel les éléments structurés (13) relient le dispositif structuré (12, 20) à la couche de base (6) ou à la couche de recouvrement (8) ou au moins à un autre dispositif structuré (12, 20).

2. Moule selon la revendication 1, **caractérisé en ce que** l'au moins un dispositif structuré (12, 20) présente au moins six, de manière préférée huit, éléments structurés (13), dans lequel l'au moins un dispositif structuré (12, 20) avec les au moins six, de manière préférée huit, éléments structurés (13) est relié à au moins un autre dispositif structuré (12, 20) et/ou à la couche de recouvrement (8) et/ou à la couche de base (6).

3. Moule selon la revendication 2, **caractérisé par** au moins une section de noeud (19), de laquelle au moins deux éléments structurés (13) s'étendent de manière à s'en éloigner en forme de couronne ou d'étoile.

4. Moule selon la revendication 3, **caractérisé en ce que** respectivement au moins trois, de manière préférée quatre, éléments structurés (13) sont associés à une moitié (14, 15) du dispositif structuré (12, 20), dans lequel chaque moitié (14, 15) réalisent une couronne d'éléments structurés (13) et les deux moitiés (14, 15) sont reliées sur une section de noeud (19).

5. Moule selon la revendication 3 ou 4, **caractérisé en ce que** les au moins six, en particulier huit, éléments structurés (13) s'étendent selon un angle (17, 18) défini, de manière préférée à 45° par rapport à un plan central (16) à travers la section de noeud (19) et/ou à 45° par rapport à un plan longitudinal, s'étendant de manière perpendiculaire sur le plan central, à travers la section de noeud (19) de manière à s'éloigner de la section de noeud (19).

6. Moule selon l'une quelconque des revendications 3 à 5, **caractérisé en ce qu'**une section de noeud (19) est réalisée entre deux dispositifs structurés (12, 20) reliés entre eux.

7. Moule selon l'une quelconque des revendications précédentes 2 à 6, **caractérisé en ce qu'**au moins un élément structuré (13) présente une section transversale au moins par endroits ronde et/ou angulaire, en particulier rectangulaire.

8. Moule selon l'une quelconque des revendications précédentes 2 à 7, **caractérisé en ce qu'**un chanfrein (21 - 23) est réalisé entre au moins un élément structuré (13) de la première moitié (14, 15) d'au moins un dispositif structuré (12, 20) et au moins un autre élément structuré de l'autre moitié (14, 15) du dispositif structuré (12, 20).

9. Moule selon l'une quelconque des revendications 2 à 8, **caractérisé en ce qu'**au moins un élément structuré (13), de manière préférée plusieurs éléments structurés (13) reliés entre eux, présente au moins un canal de fluide, lequel canal de fluide peut être traversé par au moins un fluide.

10. Moule selon l'une quelconque des revendications 2 à 8, **caractérisé en ce qu'**au moins deux dispositifs structurés (12, 20) différents, en particulier présentant une mise à l'échelle différente, sont disposés dans la couche intermédiaire (7), en particulier dans la zone d'une section sensiblement horizontale de la couche de recouvrement (8).

11. Moule selon l'une quelconque des revendications précédentes, **caractérisé en ce qu'**un comportement d'écoulement de l'au moins un fluide dans la couche intermédiaire (7) peut être réglé ou est réglé par une densité volumique des dispositifs structurés (12, 20) dans la couche intermédiaire (7).

12. Moule selon l'une quelconque des revendications précédentes, **caractérisé en ce que** le moule (1) peut être couplé à au moins un dispositif de production d'écoulement (10) de telle manière qu'une pression définie du fluide peut être réglée dans la couche intermédiaire (7), en particulier une surpression ou une dépression peut être produite sur au moins un orifice (11) dans la couche de recouvrement (8).

13. Procédé de fabrication d'un moule (1), en particulier d'un moule (1) selon l'une quelconque des revendications précédentes, avec au moins une zone réalisant au moins une section d'une empreinte (5), dans lequel le moule (1) présente une couche de base (6) et une couche de recouvrement (8) délimitant au moins par endroits l'empreinte, reliée à la couche de base (6) par l'intermédiaire d'une couche intermédiaire (7), dans lequel la couche intermédiaire (7) peut être traversée par au moins un fluide entre au moins une entrée d'écoulement (9) et au moins un orifice (11) disposé dans la couche de recouvrement (8), dans lequel
au moins un dispositif structuré (12, 20), de manière préférée une pluralité de dispositifs structurés (12, 20) est disposé dans la couche intermédiaire (7), dans lequel la couche de recouvrement (8) est reliée à la couche de base (6) par l'intermédiaire de l'au moins un dispositif structuré (12, 20) et l'au moins un dispositif structuré (12, 20) est parcouru en périphérie par l'au moins un fluide guidé dans la couche intermédiaire (7),
**caractérisé en ce que**
une volume unitaire est défini, qui est plus grand que le volume de la couche intermédiaire (7), dans lequel le volume unitaire est rempli, en particulier de manière homogène, avec des dispositifs structurés (12, 20) reliés les uns aux autres puis l'intersection entre le volume unitaire et la couche intermédiaire (7) est formée, laquelle intersection fixe la position des divers dispositifs structurés (12, 20).

14. Procédé destiné à utiliser un moule, en particulier un moule de moussage, pour fabriquer un objet (2) à partir de particules de matière plastique expansibles, avec au moins une zone réalisant au moins une section d'une empreinte (5), **caractérisé en ce qu'**un moule (1) selon l'une quelconque des revendications 1 à 12 est utilisé.
